## Europäisches Patentamt

## European Patent Office

## Office européen des brevets

(19)

(11) Numéro de publication: **0 213 008**
**B1**

(12)

# FASCICULE DE BREVET EUROPÉEN

(45) Date de publication du fascicule du brevet:
**02.11.88**

(51) Int. Cl.⁴: **B 64 D 43/00**, B 60 K 37/00

(21) Numéro de dépôt: **86401542.5**

(22) Date de dépôt: **10.07.86**

(54) **Panneau lumineux pour le montage en batterie de composants d'équipement embarqué.**

(30) Priorité: **15.07.85 FR 8510923**

(43) Date de publication de la demande:
**04.03.87 Bulletin 87/10**

(45) Mention de la délivrance du brevet:
**02.11.88 Bulletin 88/44**

(84) Etats contractants désignés:
**DE FR GB IT**

(56) Documents cité:
**FR-A-2 231 077**
**FR-A-2 467 727**
**US-A-2 890 445**

(73) Titulaire: **CROUZET, 128, Avenue de la République, F-75011 Paris (FR)**

(72) Inventeur: **Dijaux, Jean- Marc, 25, rue Jules Védrines, F-26027 Valence Cédex (FR)**
Inventeur: **Jamet, Gérard, 25, rue Jules Védrines, F-26027 Valence Cédex (FR)**
Inventeur: **Jourdan, Jean- Marie, 25, rue Jules Védrines, F-26027 Valence Cédex (FR)**

(74) Mandataire: **Bloch, Gérard, 6, rue du Faubourg Saint- Honoré, F-75008 Paris (FR)**

LIBER, STOCKHOLM 1988

## Description

La présente invention concerne un panneau lumineux pour le montage en batterie de composants modulaires, notamment des disjoncteurs à commande manuelle, destinés à l'équipement embarqué sur aéronef pour le contrôle et la protection centralisés de l'installation électrique de bord.

Dans ce genre d'application et en particulier pour l'équipement des postes de pilotage d'hélicoptères, les panneaux de disjoncteurs tout comme d'ailleurs la plupart des autres instruments de bord sont groupés avec une forte densité de montage dans l'espace exigu d'une console centrale, où ils se présentent sous le regard et à portée de main des pilotes de manière à ce que leur surveillance et leur manipulation, notamment pendant les vols nocturnes, soient facilités au maximum.

Par ailleurs, les contraintes de l'exploitation des aéronefs impliquant généralement le remplacement à moindres coûts et délais des composants d'équipement défaillants voire simplement douteux, leur mode de montage et de raccordement ainsi que leur accessibilité derrière les panneaux qui les recouvrent doivent faciliter au maximum les interventions du personnel technique chargé de la maintenance au sol sur les lieux même d'exploitation.

C'est avec cette double préoccupation que le problème ainsi posé s'est concrétisé dans l'objet de l'invention selon la revendication annexée.

Ainsi, dans le cadre de l'invention et dans le but d'obtenir une densité maximale d'implantation des disjoncteurs sur leur panneau de support et de présentation, il a tout d'abord fallu déplacer l'étiquette de repérage de la fonction de chaque disjoncteur depuis le panneau où elle était antérieurement située, sur le bouton de commande manuelle du disjoncteur lui-même. De plus, afin que ce repérage soit lisible dans l'obscurité, un éclairage spécifique à chaque disjoncteur a été réalisé en intégrant dans le bouton de commande manuelle des moyens de propagation de la lumière issue de sources proches intégrées dans la façade du panneau. Pour cela, les disjoncteurs dont l'organe de commande manuelle est traditionnellement du type poussé-tiré ("Push-Pull") ont été modifiés de manière à fonctionner selon le mode connu du type poussé-poussé ("Push-Push").

L'éclairage des boutons de commande de chacun des disjoncteurs s'obtient ainsi en partie par réflexion de la lumière émise par la source (par exemple une microlampe) sur une plaque métallique de fixation, présente sur l'épaulement supérieur du disjoncteur et en partie par éclairage direct. Avant de parvenir sur la partie translucide de l'étiquette la lumière est acheminée par le bouton de commande moulé en matière plastique transparente (par exemple en polycarbonate) et légèrement dépoli sur sa face supérieure où l'étiquette est maintenue en appui par une lunette de fixation élastique.

Lorsque le disjoncteur est enclenché le bouton de commande affleure le panneau et seule l'étiquette (éventuellement illuminée dans l'obscurité) est visible par le pilote. Lorsqu'au contraire, le disjoncteur est déclenché, que ce soit volontairement par le pilote ou spontanément à la suite d'un défaut sur la ligne protégée, le bouton de commande est en saillie par rapport au panneau et une bague de couleur blanche apparaît sur le pourtour du bouton pour réaliser la fonction nécessaire de signalisation d'état des dispositifs de protection électrique embarqués sur aéronef.

Dans cette position déclenchée, là encore, l'étiquette et la bague blanche peuvent être éclairés en ambiance nocturne. Le raccordement électrique des disjoncteurs s'effectue par embrochage de leurs bornes du type à languette sur des connecteurs modulaires contenant des clips de branchement élastique, de forme aplatie, qui sont eux-mêmes raccordes soit à une barre-bus d'alimentation commune soit aux différents fils conducteurs du réseau de distribution.

Les clips de branchement sont d'un type connu, dit "de securité", comportant un ergot élastique qui permet de les verrouiller par un simple enfichage encliquetable à l'intérieur des alvéoles individuels ménagés à cet effet dans les connecteurs. Ces clips peuvent être facilement déverrouillés et extraits de leur alvéole respectif à l'aide d'un outil spécifique que le réparateur peut introduire indifféremment par l'avant ou l'arrière du connecteur.

La description qui suit expose, à titre d'exemple non limitatif, les différents aspects caractéristiques de l'invention en faisant référence au dessin annexé dans lequel:

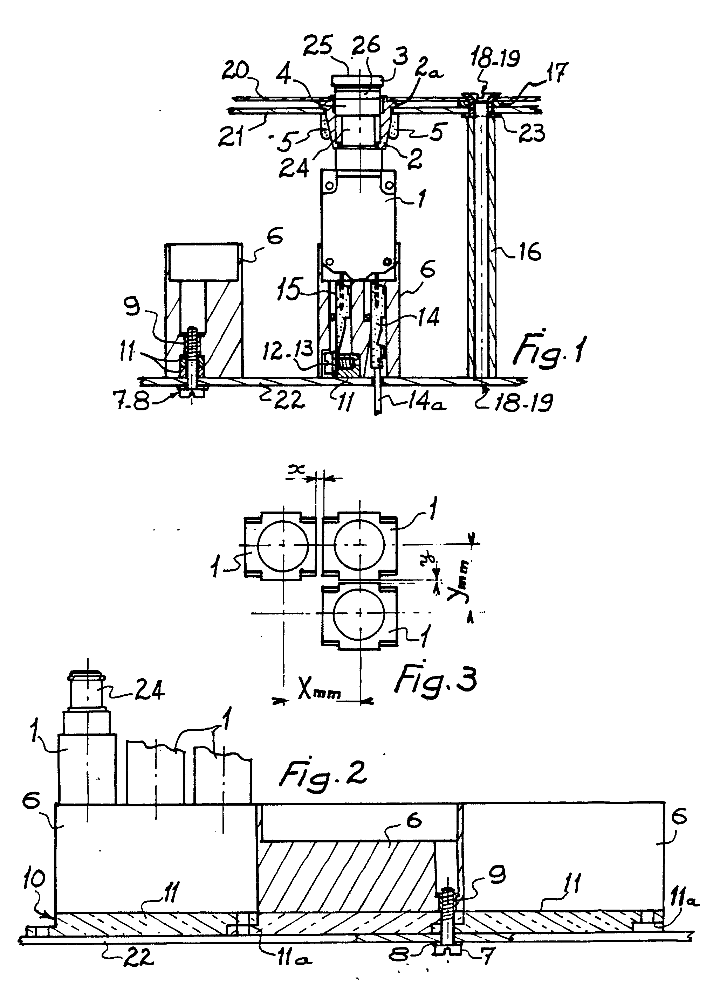

- la figure 1 représente en élévation latérale et en coupe partielle, une vue fragmentaire du panneau support de disjoncteurs, dont l'agencement des éléments constitutifs est conforme à l'invention,

- la figure 1 représente en élévation latérale perpendiculaire à celle de la figure 1 une vue des éléments modulaires d'interconnexion tels qu'ils sont mutuellement agencés et fixés sur le fond du panneau de la figure 1, et,

- la figure 3 représente schématiquement la "grille" d'implantation au pas normalisé des disjoncteurs dans le panneau de l'invention.

En se référant aux figures annexées, le panneau de disjoncteurs objet de l'invention est un ensemble comprenant les éléments suivants :

- une façade antérieure réalisée dans une plaque métallique 20 mince et rigide, perforée d'une pluralité de trous pour le passage de boutons 4 de commande de disjoncteurs 1 et espacés les uns des autres conformément à une "grille" d'implantation schématisée sur la figure 3,

- des bagues 2 moulées en matière plastique pour assurer individuellement le guidage des boutons 4 et le maintien en position fixe de chacun des disjoncteurs 1 , et

- une plaque 21 de circuit imprimé, perforée comme la façade 20, et comportant les pistes conductrices pour l'alimentation électrique de micro lampes 5 montées sur la plaque 21, au voisinage des trous de passage des boutons 4.

Ces trois éléments sont assemblés par exemple au moyen de rivets tubulaires 23 et de bagues entretoises 17 pour constituer un élément indissociable en forme de tableau dont l'amovibilité en une seule pièce permet d'accéder commodément à l'ensemble des disjoncteurs 1 afin de permettre leur remplacement individuel par simple débrochage.

Comme on peut le voir sur le dessin les bagues 2 de guidage des boutons de manoeuvre 4 sont pourvus d'une collerette 2a destinée à les maintenir prisonnières entre la plaque externe 20 et le circuit imprimé 21 formant le tableau antérieur amovible. Par ailleurs la jupe des bagues 2 présente des fenêtres latérales de passage de la lumière émise par les microlampes 5 vers le bouton diffuseur translucide 4.

Outre les éléments précédents, le panneau selon l'invention comprend encore des boîtiers connecteurs modulaires 6 moulés en matière plastique isolante de dimensions telles que leur juxtaposition de montage, sur une plaque-support postérieure 22, est déterminée par le maillage millimétrique X - Y du réseau d'implantation des disjoncteurs juxtaposés sur le panneau.

Les boîtiers 6 sont pourvus de plusieurs paires d'alvéoles (trois par exemple) destinés à recevoir des clips de connexion 14 et 15, du type de sécurité, pour l'embrochage bipolaire des bornes à languette des disjoncteurs 1. Les clips 14 correspondant à la terminaison du conducteur de liaison 14a à chacun des circuits protégés se verrouillent sur les boîtiers connecteurs 6 par encliquetage dans leur alvéole respectif, grace à une petite languette élastiquement escamotable.

Les clips 15 correspondant à la connexion de masse commune à l'ensemble des circuits protégés, par chacun des disjoncteurs 1 sont fixés par des vis freinées 12, 13, à une barre-bus modulaire 10 constituée d'une succession de segments conducteurs 11 incorporés dans une rainure latérale prévue à la partie inférieure de chaque boîtier connecteur 6. La liaison mécanique et électrique par l'emboîtement des extrémités des segments successifs 11 formant la barre-bus 10, ainsi que leur fixation mécanique individuelle avec les boîtiers connecteurs 6 sur la plaque-support isolante 22 est assurée simultanément grâce aux vis 7 freinées par la rondelle 8 après vissage dans la douille taraudée 9 noyée au fond d'un alvéole ménagé à l'une des extrémités des boîtiers connecteurs modulaires 6.

L'ensemble des éléments de la structure comprenant la plaque-support postérieure 22 et le tableau antérieur amovible 20, 21 est solidarisé par un nombre convenable de piliers à entretoise 16 dont chaque extrémité est munie de vis 18 freinées par des rondelles élastiques 19.

Chacun des disjoncteurs 1 du panneau est muni d'un bouton de commande 4, maintenu par verrouillage élastique à l'extrémité d'un organe de commande 24.

Ce bouton de commande est constitué d'un cabochon translucide diffuseur 4 destiné à acheminer et diffuser, vers une étiquette 25, la lumière émise par les microlampes 5 à travers les fenêtres latérales de la bague 2 de guidage. L'étiquette 25 portant des indications fonctionnelles translucides, est maintenue en place sur l'extrémité du cabochon 4 par une lunette 3 verrouillée élastiquement.

Une bague blanche 26 maintenue serrée par la lunette 3 sur le cabochon 4 sert de témoin visuel de l'état de déclenchement du disjoncteur lorsque le cabochon 4 de l'organe de manoeuvre 24 est saillant du tableau 20.

## Revendication

Panneau lumineux pour le montage en batterie de composants modulaires (1) caractérisé par le fait qu'il comprend, d'une part, un tableau de façade antérieur amovible comprenant:
- une première plaque rigide (20), perforée d'une pluralité de trous pour le passage des boutons (4) de manoeuvre desdits composants modulaires (1) juxtaposés conformément à une "grille" d'implantation normalisée,
- une pluralité de bagues (2) moulées en matière plastique pour assurer individuellement le guidage desdits boutons (4) ainsi que le maintien en position fixe desdits composants modulaires (1),
- une deuxième plaque (21) de circuit imprimé, perforée comme ladite première plaque (20) à laquelle elle est solidairement associée et comportant des pistes conductrices pour l'alimentation électrique de microlampes (5) d'éclairage desdits boutons (4) en matière translucide; le panneau comprenant, d'autre part, juxtaposés sur une plaque postériure de support isolante (22), une pluralité de boîtiers connecteurs modulaires (6) incorporant des moyens de connexion électrique (14, 15) par embrochage des composants (1) sur les boîtiers (6) modulaires, les moyens de connexion électrique étant reliés à des conducteurs isolés (14a) de liaison individuelle à chaque circuit fonctionnel et à un segment modulaire (11) d'une barre-bus (10) de liaison commune à l'ensemble des circuits fonctionnels.

## Patentanspruch

Leuchtpaneel zur Montag in einer Gruppe von modularen Komponenten (1),
dadurch gekenneichnet,
daß es umfasst
einerseits eine vornliegende, abnehmbare Fassadentafel, umfassend

- eine erste steife Platte (20), die mit einer Vielzahl von durchgehenden Löchern versehen ist, um Handhabungsknöpfe (4) für die modularen Komponenten (1) durchzulassen, die nebeneinander in Form eines genormten Montagerasters angeordnet sind,

- eine Vielzahl von Ringen (2) aus Kunststoffmaterial zum individuellen Führen der Knöpfe (4) und um die modularen Komponenten (1) in einer festen Position zu halten,

- eine zweite Platte (21), die eine gedruckte Schaltung umfaßt, welche wie die erste Platte (20) Löchter aufweist, an der sie fest verbunden ist, und Leiterbahnen zur Stromversorgung für Beleuchtungs-Mikrolampen (5) der Knöpfe (4) aus durchscheinendem Material trägt;

der Paneel andererseits umfassend eine Vielzahl von nebeneinander auf einer hintenliegenden, isolierenden Halteplatte (22) angeordneten modularen Verbindungsgehäusen (6), die elektrische Verbindungsmittel (14, 15) aufweisen, zum Einstecken der Komponenten in die modularen Gehäuse (6), wobei die elektrischen Verbindungsmittel mit isolierten Leitern (14a) zur Verbindung eines jeden individuellen Funktionskreises und mit einem Modulsegment (11) einer gemeinsamen Verbindungsbusschiene (10) für die Anordnung von Funktionskreisen verbunden sind.

**Claim**

Luminous panel for the battery mounting of modular components (1), characterized in that is comprises, on the one hand, an anterior removable front plate comprising:

- a first rigid plate (20), perforated with a plurality of holes for permitting passage therethrough of the knobs (4) for operating said modular components (1) juxtaposed in accordance with a standardized implantation "grid",

- a plurality of plastic material molded rings (2) for individually guiding said knobs (4) as well as for holding said modular components (1) in a fixed position,

- a second printed circuit board (21), perforated as said first plate (20) with which it is securely associated and having conducting tracks for supplying electric power to microlamps (5) illuminating said translucent material knobs (4);

The panel further including, on the one hand, juxtaposed on an insulating posterior support plate (22), a plurality of modular connecting housings (6) incorporating means (14, 15) for electric connection by clipping the components (1) on the modular housings (6), the means for electric connection being connected to isolated conductors (14a) for individual connection to each functional circuit and to a modular section (11) of a connecting bus bar (10) common to the assembly of the functional circuits.

Fig. 1

Fig. 3

Fig. 2